Europäisches Patentamt

(19) European Patent Office

Office européen des brevets

(11) Publication number: 0 112 160
A1

## (12) EUROPEAN PATENT APPLICATION

(21) Application number: 83307587.2

(22) Date of filing: 13.12.83

(51) Int. Cl.³: F 16 B 13/06

(30) Priority: 15.12.82 AU 7279/82

(43) Date of publication of application:
27.06.84 Bulletin 84/26

(84) Designated Contracting States:
DE FR GB

(71) Applicant: OLIN CORPORATION
120 Long Ridge Road
Stamford Connecticut 06904(US)

(72) Inventor: Beton, Richard John
17 Cluney Street
South Blackburn Victoria(AU)

(74) Representative: Lambert, Hugh Richmond et al,
D. YOUNG & CO. 10 Staple Inn
London, WC1V 7RD(GB)

(54) Masonry anchors.

(57) A masonry anchor comprises a sleeve (2) and a nut (4) at the distal end portion of the sleeve (2), the sleeve (2) being expandible when the nut (4) is drawn into the sleeve by screw means, the sleeve (2) and the nut (4) being cast as an integral unit with the nut (4) being initially connected to the sleeve (2) by a portion (14) of the cast material which is frangible upon tightening of the screw means. Preferably, the sleeve (2) and the nut (4) consist of a zinc diecasting.

FIG 4.

EP 0 112 160 A1

1

"MASONRY ANCHORS"

The present invention relates to masonry anchors, and more particularly to masonry anchors of the type comprising an expansion sleeve arranged to be inserted into a preformed hole and carrying at its inner or distal end a captive nut which is drawn into the sleeve by screw means, to thereby expand the sleeve.

One previously proposed masonry anchor of the above type comprises a sleeve composed of two initially separate semi-cylindrical parts pressed from plate material and held together by means of tabs which permit the two parts to move apart as the nut is drawn into the sleeve. The nut is formed separately from the sleeve and is initially of square section with the corner portions being chamfered by machining so that the cross-section of the nut diverges in a direction towards the adjacent end of the sleeve. The nut is held captive within the inner end portion of the sleeve by lugs which are pressed over the end of the nut. An anchor of this constructions is relatively expensive to produce as it requires the handling of three separate parts and machining of the nut.

2

According to the invention, there is provided a masonry anchor comprising a sleeve and a nut at the distal end portion of the sleeve, the sleeve being expandible when the nut is drawn into the sleeve by screw means, the sleeve and the nut being cast as an integral unit with the nut being initially connected to the sleeve by a portion of the cast material which is frangible upon tightening of the screw means.

Preferably, the connection between the nut and the sleeve is formed by a thin annular web which is sheared between the sleeve and the nut upon tightening of the screw means.

The nut preferably includes a plurality of longitudinal ribs which engage in respective longitudinal slots in the distal end portion of the sleeve to hold the nut against rotation as the nut is drawn into the sleeve.

Preferably, the longitudinal slots are each formed part-way through the thickness of the sleeve, the remaining thickness being defined by a frangible web of the cast material which is broken by the rib as the nut is drawn into the sleeve, whereby the slots then extend through the entire thickness of the sleeve, said slots when formed through the entire thickness of the sleeve enabling the sleeve to expand.

3

An embodiment of the invention will now be described, by way of example only, with reference to the accompanying diagrammatic drawings, in which;-

Figure 1 is a side elevation of a masonry anchor in accordance with a preferred embodiment of the invention;

Figure 2 is a longitudinal section of the anchor shown in Figure 1;

Figure 3 is a fragmentary section, to an enlarged scale, showing a detail of Figure 2;

Figure 4 is a side elevation, partly in section, of the masonry anchor when viewed 90° from the side elevation of Figure 1; and

Figure 5 is a section on line B-B of Figure 4.

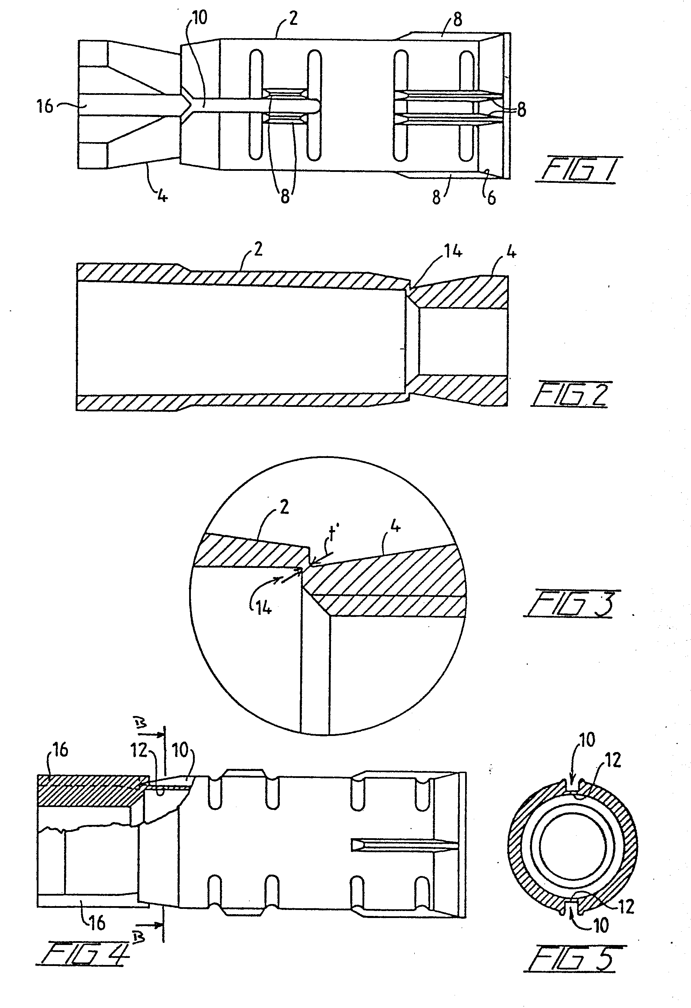

The masonry anchor shown in the drawings comprises an expansion sleeve 2 and a nut 4 which are formed integrally in a casting process, preferably a die casting process. The sleeve is of generally cylindrical form and is provided at its outer or proximate end with a flared outer surface 6 which restricts movement of the outer end of the sleeve into a hole preformed into masonry. Longitudinal ribs 8 provided on the outer surface of the sleeve body act to prevent rotation of the sleeve 2 within the hole. The sleeve is formed with longitudinal slots 10 extending from its inner or distal end. In the embodiment illustrated, there are two such slots 10 in diametrically opposed relation, although only one of the slots 10 can be seen in Figures 1 and 4. The slots 10 divide the inner end portion of the sleeve 2 into two parts to permit subsequent expansion of the sleeve 2. Initially, and as shown in Figures 4 and 5, the slots 10 are each closed by a thin, frangible, web 12 of material which is formed during casting, but which is broken during expansion of the sleeve 2.

The nut 4 is of generally conical configuration and is connected to the inner end of the sleeve by a thin annular web 14 of material which is formed during casting and is shown in detail in Figures 2 and 3. On opposite sides, in alignment the respective slots 10 in the sleeve 2, the nut 4 is formed with a longitudinal rib 16 with a tapered end which lies within an enlarged inlet mouth of the corresponding slot 10 as shown in Figure 1.

In use, the integral sleeve and nut are inserted into a hole drilled in masonry. A fastening bolt (not shown) inserted through the sleeve 2 is screwed into the nut 4 and is tightened. The force exerted between the nut 4 and the sleeve 2 by the bolt causes the annular web 14 securing the nut 4 to the sleeve 2 to fracture, thus permitting the nut 4 to be withdrawn into the sleeve 2. It will be noted from Figure 3 that on tightening of the nut the web 14 will be subjected substantially to a shear force between the sleeve 2 and nut 4. Upon fracture of the annular web 14, the nut 4 is prevent from rotating by the entry of the tapered ends of the ribs 16 into the corresponding slots 10. The axial force applied by the bolt to the

5

nut 4, drives the ribs 16 along the slots 10 with the thin webs 12 of material closing the slots 10 being progressively broken by the tapered ends of the ribs 16. The inner end portion of the sleeve 2 is expanded as the nut 4 is drawn inwardly, due to the co-operation between the conical outer surface of the nut 4 and the inner surface of the sleeve, and also due to the action of the ribs 16 which are wider than the slots and tend to force the walls of the slots apart.

The integral sleeve/nut assembly is preferably pressure die cast in zinc, for example zinc alloy to AS H64 Alloy B, although other zinc alloys or other metallic materials such as aluminium or brass could be used. After casting, the thread is cut within the bore of the nut 4 and when the casting is a zinc die cast, the casting is preferably zinc plated to facilitate subsequent handling and also to provide a bright appearance to the finished product.

The annular web 14 which connects the nut to the sleeve is sufficiently strong to prevent separation of the nut 4 from the sleeve 2 accidently during normal handling, but nevertheless is sufficiently thin as to be sheared upon tightening of the bolt without requiring excessive tightening forces. With an integral sleeve/nut assembly pressure die cast from zinc alloy to AS H64 Alloy B, the thickness t of the web 14 is from 0.05 to 0.3mm, preferably 0.1 to 0.2mm.

It will be noted that the external diameter of the sleeve 2 in the zone adjacent the web 14, is reduced in the direction of the web 14, so that the rear end portion of the sleeve 2 is conically tapered. This taper permits the nut 4 to move through an increased distance into the sleeve 2, after fracture of the web 14, before the outside diameter of the sleeve expands into contact with the wall of the drilled hole. This increased entry distance provides increased contact area between the nut and sleeve to prevent localised wedging or galling of the sleeve and nut materials and thus localised collapse of the thin leading end of the nut as may occur if the contact forces were concentrated over a small area. In addition, the tapered end portion of the sleeve, upon expansion, provides substantially parallel contact with the hole wall, thus spreading the applied load over a larger area than would result from expansion of a sleeve of constant diameter in its unexpanded state and which would, in effect, only have line contact with the hole wall after expansion.

In a practical example, the taper of the end portion of the sleeve 2 provides a 16°included angle, the taper reducing the wall thickness at the point where the sleeve 2 joins the web 14 to 0.4 to 0.6 of the nominal wall thickness of the main body of the sleeve, preferably the reduction being to 0.5 of the nominal wall thickness.

7

An integral sleeve/nut assembly as described will be significantly less expensive to produce than the three-part assembly discussed earlier.

The sleeve/nut assembly illustrated is primarily intended for use in solid masonry. A version of reduced length for use in, for example, hollow concrete blocks can be produced by shortening the sleeve by removing the front end portion of the sleeve to the end of the first set of ribs 8; this may be done by blanking the corresponding portion of the die.

The embodiment has been described by way of example only, and modifications are possible within the scope of the invention which includes every novel feature or novel combination of features disclosed.

CLAIMS:-

1.     A masonry anchor comprising a sleeve (2) and a nut (4) at the distal end portion of the sleeve (2), the sleeve (2) being expandible when the nut (4) is drawn into the sleeve by screw means, characterized in that the sleeve (2) and the nut (4) are cast as an integral unit  with the nut (4) being initially connected to the sleeve (2) by a portion (14) of the cast material which is frangible upon tightening of the screw means.

2.     A masonry anchor according to claim 1, characterized in that the connection between the nut (4) and the sleeve (2) is formed by a thin annular web (14) which is sheared between the sleeve (2) and the nut (4) upon tightening of the screw means.

3.     A masonry anchor according to claim 1 or claim 2, characterized in that the nut (4) includes a plurality of longitudinal ribs (16) which engage in respective longitudinal slots (10) in the distal end portion of the sleeve (2) to hold the nut (4) against rotation as the nut (4) is drawn into the sleeve (2).

4.     A masonry anchor according to claim 3, characterized. in that the longitudinal slots (10) are each formed part-way through the thickness of the sleeve (2), the remaining thickness being defined by a frangible web (12) of the cast material which is broken by the rib (16) as the nut (4) is drawn into the sleeve (2), whereby the slots (10) then extend through the entire thickness of the sleeve (2), said slots (10) when formed through the entire thickness of the sleeve (2) enabling the sleeve (2) to expand.

5.    A masonry anchor according to claim 3 or claim 4 characterized in that the proximate end of each rib (16) is tapered and lies within an enlarged end portion of the corresponding slot (10) prior to tightening of the screw means.

FIG 1

FIG 2

FIG 3

FIG 4

FIG 5

## European Patent Office

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 149 117 (A. BERNER)<br>* Page 2, lines 23-39; page 3, lines 1-12; figure 1 * | 1-3,5 | F 16 B 13/06 |
| Y | | 4 | |
| | --- | | |
| Y | US-A-3 216 304 (J.J. JAMES et al.)<br>* Column 7, lines 3-20; figures 8-12 * | 4 | |
| | ----- | | |

TECHNICAL FIELDS SEARCHED (Int. Cl. ³)

F 16 B

The present search report has been drawn up for all claims

| Place of search | Date of completion of the search | Examiner |
|---|---|---|
| THE HAGUE | 07-03-1984 | VAN WESTENBRUGGE A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82